**Europäisches Patentamt**

**European Patent Office**

**Office européen des brevets**

(19)

(11) Veröffentlichungsnummer : **0 383 084 B1**

(12)

# EUROPÄISCHE PATENTSCHRIFT

(45) Veröffentlichungstag der Patentschrift :
**02.12.92 Patentblatt 92/49**

(21) Anmeldenummer : **90101707.9**

(22) Anmeldetag : **29.01.90**

(51) Int. Cl.⁵ : **F16L 37/08**, F16L 37/14,
F02M 55/02

(54) Verbindungselement.

(30) Priorität : **15.02.89 DE 3904479**

(43) Veröffentlichungstag der Anmeldung :
**22.08.90 Patentblatt 90/34**

(45) Bekanntmachung des Hinweises auf die
Patenterteilung :
**02.12.92 Patentblatt 92/49**

(84) Benannte Vertragsstaaten :
**DE ES FR GB IT**

(56) Entgegenhaltungen :
**US-A- 3 245 703**
**US-A- 3 603 621**

(73) Patentinhaber : **ROBERT BOSCH GMBH**
**Postfach 30 02 20**
**W-7000 Stuttgart 30 (DE)**

(72) Erfinder : **Smith, Loren**
**41254 Southwind**
**48188 Canton, MI (US)**

EP 0 383 084 B1

**Beschreibung**

Stand der Technik

Die Erfindung betrifft eine Einspritzvorrichtung enthaltend ein Verbindungselement zum Verbinden einer Einspritzdüse mit einem dazu koaxialen Anschlußstutzen an einer Einspritzleitung gemäß Anspruch 1.

Bei einer aus DE-A-3428597 bekannten Vorrichtung ist das Verbindungselement als U-förmige Federklammer ausgebildet, deren Steg quer zur Längserstreckung der Einspritzdüse verläuft und deren Schenkel einerseits mit am Rand radial einwärtsgebogenen Lappen in die Umfangsnut an der Einspritsdüse eingreifen und andererseits Durchbrechungen aufweisen, in die der Verriegelungsbund am Anschlußstutzen einrastbar ist. Zur radialen Fixierung der Federklammer in der Umfangsnut der Einspritzdüse weisen die Lappen kreisbogenförmig und konkav verlaufende Abschnitte auf, deren Radius dem der Umfangsnut entspricht. Bei der Montage wird zuerst die Federklammer auf die Einspritzdüse aufgeschoben, wobei die Schenkel in die Umfangsnut einrasten. Dann wird die mit der Federklammer versehene Einspritzdüse axial in den Anschlußstutzen eingeschoben. Damit die Schenkel über den Verriegelungsbund gleiten können, sind diese in Einsteckrichtung nach außen abgewinkelt und werden von dem Verriegelungsbund beim Einstecken aufgespreizt. Sobald der Verriegelungsbund in die Durchbrechung eingerastet ist, springen die Schenkel wieder in ihre Ausgangsstellung zurück.

Eine solche aus Blech gestanzte Federklammer hat den Vorteil einer sehr einfachen Montage. Die Federklammer wird maschinell auf die Einspritzdüse aufgeschoben und die vormontierte Einheit wird axial in den Anschlußstutzen der Einspritzleitung bis zur Einrastung der Federklammer hineingeschoben. Dabei können hohe Axialkräfte übertragen werden, ohne daß dabei Biegemomente auftreten.

Vorteile der Erfindung

Bei der erfindungsgemäßen Vorrichtung kann das Verbindungselement gemäß den Merkmalen des Anspruchs 1 unter Beibehaltung der vorstehend genannten Vorteile einfacher und kostensparender hergestellt werden. Der einstückige Kunststoffclip wird in einem einzigen Herstellungsgang abgespritzt oder abgedrückt. Der Clip stellt eine zuverlässige Verbindung von Einspritzdüse und Einspritzleitung auch unter rauhen Betriebsbedingungen sicher.

Durch die in den weiteren Ansprüchen aufgeführten Maßnahmen sind vorteilhafte Weiterbildungen und Verbesserungen der im Anspruch 1 angegebenen Vorrichtung möglich.

Zeichnung

Die Erfindung ist anhand eines in der Zeichnung dargestellten Ausführungsbeispiels in der nachfolgenden Beschreibung näher erläutert. Es zeigen:
Fig. 1 eine Seitenansicht von Einspritzdüse und Einspritzleitung, die durch ein Verbindungselement miteinander verbunden sind, teilweise geschnitten,
Fig. 2 eine Draufsicht des Verbindungselements in Fig. 1,
Fig. 3 eine Seitenansicht des Verbindungselements in Fig. 1 bzw. 2.

Beschreibung des Ausführungsbeispiels

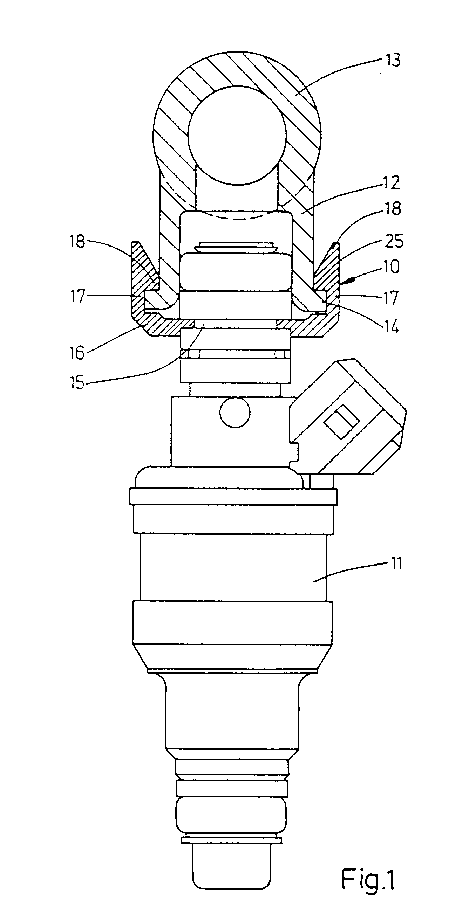

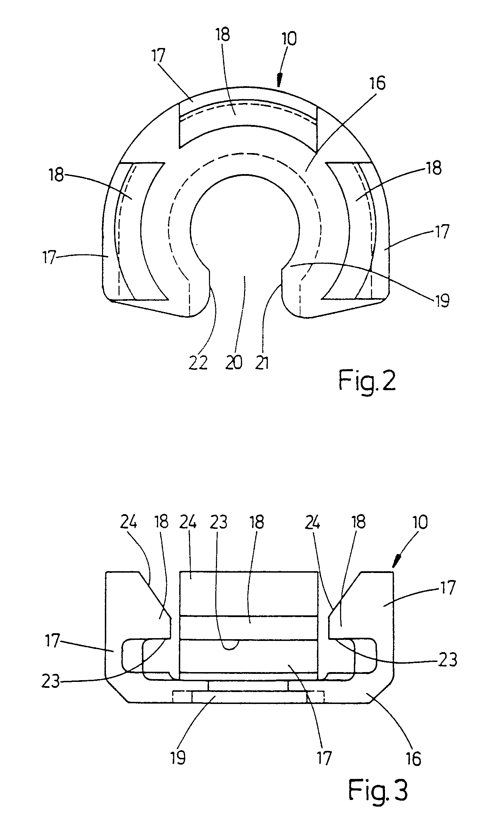

Der in Fig. 2 in Draufsicht und in Fig. 3 in Seitenansicht zu sehende einstückige Kunststoffclip 10 aus glasfaserverstärktem Kunststoff dient zum Verbinden des rückwärtigen Endes einer Einspritzdüse 11 mit einem Anschlußstutzen 12 einer die Einspritzdüse 11 mit Kraftstoff versorgenden Einspritzleitung 13 (Fig. 1). Der Anschlußstutzen 12 ist dabei einstückig an die im allgemeinen aus Kunststoff gefertigte Einspritzleitung 13 angeformt und ist an seinem freien Ende mit einem über den Umfang radial vorstehenden Verriegelungsbund 14 versehen. Die Einspritzdüse 11 trägt nahe ihrem in den Anschlußstutzen 12 einsteckbaren Ende einer Umfangsnut 15. Der Kunststoffclip 10 greift in die Umfangsnut 15 und verrastet hinter dem Verriegelungsbund 14, wodurch die Verbindung von Einspritzdüse 11 und Anschlußstutzen 12 hergestellt wird.

Wie in Fig. 2 und 3 zu sehen ist, besteht im einzelnen der Kunststoffclip 10 aus einer C-förmigen Ringscheibe 16 und aus drei von der Ringscheibe 16 in Achsrichtung des Kunststoffclip 10 wegstehenden Federstegen 17, die an ihren einander zugekehrten Innenseiten jeweils eine Rastnase 18 zum Hintergreifen des Verriegelungsbundes 14 tragen. Ringscheibe 16, Federstege 17 und Rastnasen 18 sind miteinander einstückig. Die Ringscheibe 16 hat einen dem Außendurchmesser der Umfangsnut 15 an der Einspritzdüse 11 entsprechenden Innendurchmesser und trägt auf ihrer von den Federstegen 17 abgekehrten Unterseite eine koaxiale Ausnehmung 19, deren Innendurchmesser dem Außendurchmesser der Einspritzdüse 11 im Bereich der Umfangsnut 15 entspricht. Die axiale Tiefe der Ausnehmung 19 ist gleich der Differenz aus Dicke der Ringscheibe 16 und axialer Breite der Umfangsnut 15 bemessen, so daß im Bereich der Ausnehmung 19 an der Ringscheibe 16 ein Nuteingriffsbereich mit einer der Nutbreite entsprechenden Dicke entsteht. Mit diesem Nuteingriffsbereich greift die Ringscheibe 16 etwa formschlüssig in die Umfangsnut 15 ein, wobei die Ausnehmung 19 die Außenwand der Einspritzdüse 11 umschließt. Aufgrund ihrer C-Form weist die Ringscheibe 16 eine Öffnung 20 auf, deren Öffnungsbreite kleiner bemessen ist als der Innendurchmesser der Ringscheibe 16. Die Öffnung 20 wird von parallelen Stirnflächen 21 bzw. 22 der Ringscheibe 16 begrenzt, die zum Außenumfang der Ringscheibe 16 hin hinter die Öffnungsbreite zurücktreten und hier abgerundet sind.

Die Federstege 17 sind um gleiche Umfangswinkel gegeneinander versetzt angeordnet, wobei der mittlere der drei Federstege 17 der Öffnung 20 in der Ringscheibe 16 diametral gegenüberliegt. Jede Rastnase 18 an einem Federsteg 17 weist eine quer zur Clipachse verlaufende Hintergreifungsfläche 23 und eine in einem spitzen Winkel zur Clipachse verlaufende Aushebeschräge 24 auf. Mittels dieser Aushebeschräge 24 vermögen die Rastnasen 18 unter Auslenkung der Federstege 17 nach außen über den Verriegelungsbund 14 hinwegzugleiten.

Zum Befestigen der Einspritzdüse 11 an dem Anschlußstutzen 12 wird zuerst der Kunststoffclip 10 radial auf das Ende der Einspritzdüse 11 aufgeschoben, und zwar derart, daß der in der Ausnehmung 19 gebildete Nuteingriffsbereich der Ringscheibe 16 in die Umfangsnut 15 der Einspritzdüse 11 eingreift. Dabei wird zunächst die Ringscheibe 16 im Bereich der Öffnung 20 aufgeweitet, um anschließend in die Umfangsnut 15 einzuschnappen, wobei die Innenwand der Ringscheibe 16 den Nutgrund der Umfangsnut 15 formschlüssig umschließt. Damit ist der Kunststoffclip 10 gegen radiales Verschieben an der Einspritzdüse 11 gesichert. Die mit dem Kunststoffclip 10 versehene Einspritzdüse 11 wird nunmehr axial in den Anschlußstutzen 12 eingeschoben. Hierbei gleiten die Rastnasen 18 über den Verriegelungsbund 14, wobei die Federstege 17 nach außen abgespreizt werden. Sobald die Rastnasen 18 über den Verriegelungsbund 14 hinweggeschoben sind, springen die Federstege 15 wieder in ihre Ausgangsstellung zurück, und die Hintergreifungsflächen 23 der Rastnasen 18 liegen auf der von der Einspritzdüse 11 abgekehrten Ringfläche 25 des Verriegelungsbundes 14 auf (Fig. 1).

## Patentansprüche

1. Einspritzvorrichtung für Kraftstoff, enthaltend eine Einspritzleitung (13) mit einem Anschlußstutzen (12), eine Einspritzdüse (11) sowie ein Verbindungselement (10) zum Verbinden der Einspritzdüse (11) mit dem dazu koaxialen Anschlußstutzen (12) an der Einspritzleitung (13), wobei das Verbindungselement (10) einerseits in eine Umfangsnut (15) an der Einspritzdüse (11) eingreift und andererseits an einem am Anschlußstutzen (12) über dessen Umfang radial vorstehenden Verriegelungsbund (14) einrastbar ist und als einstückiger Kunststoffclip (10) aus einer C-förmigen Ringscheibe (16), die einen dem Außendurchmesser der Umfangsnut (15) entsprechenden Innendurchmesser und einen Nuteingriffsbereich mit einer der Nutbreite entsprechenden Dicke besitzt, und aus von der Ringscheibe (16) in Clipachsrichtung wegstehenden Federstegen (17), die an ihren einander zugekehrten Innenseiten jeweils eine Rastnase (18) zum Hintergreifen des Verriegelungsbundes (14) aufweisen, ausgebildet ist.

2. Einspritzvorrichtung nach Anspruch 1, dadurch gekennzeichnet, daß die Ringscheibe (16) eine koaxiale Ausnehmung (19) mit einem dem Außendurchmesser der Einspritzdüse (11) im Bereich der Umfangsnut (15) entsprechenden Innendurchmesser aufweist, deren axiale Tiefe gleich der Differenz aus Scheibendicke und Nutbreite der Umfangsnut (15) bemessen ist.

3. Einspritzvorrichtung nach Anspruch 1 oder 2, dadurch gekennzeichnet, daß die Öffnungsbreite in der Ringscheibe (16) kleiner bemessen ist als deren Innendurchmesser.

4. Einspritzvorrichtung nach Anspruch 3, dadurch gekennzeichnet, daß die Öffnung (20) von parallelen Stirnflächen (21) der Ringscheibe (16) begrenzt ist, die zum Außenumfang der Ringscheibe (16) hin hinter die Öffnungsbreite zurücktreten und hier abgerundet sind.

5. Einspritzvorrichtung nach einem der Ansprüche 1 - 4, dadurch gekennzeichnet, daß insgesamt drei um gleiche Umfangswinkel gegeneinander versetzt angeordnete Federstege (17) vorhanden sind, von denen einer der Öffnung (20) der C-förmigen Ringscheibe (16) diametral gegenüberliegt.

6. Einspritzvorrichtung nach einem der Ansprüche 1 - 5, dadurch gekennzeichnet, daß jede Rastnase (18) eine quer zur Clipachse verlaufende Hintergreifungsfläche (23) und eine in einem spitzen Winkel zur Clipachse verlaufende Aushebeschräge (24) aufweist, mittels welcher die Rastnase (18) unter Auslenkung des Federstegs (17) über den Verriegelungsbund (14) hinwegzugleiten vermag.

7. Einspritzvorrichtung nach einem der Ansprüche 1 - 6, dadurch gekennzeichnet, daß der Kunststoffclip (10) aus glasfaserverstärktem Kunststoff besteht.

## Claims

1. Injection device for fuel, containing an injection conduit (13) with a connecting sleeve (12), an injection nozzle (11) and a connecting element (10) for connecting the injection nozzle (11) to the coaxial connecting sleeve (12) on the injection conduit (13), the connecting element (10) entering, on the one hand, into a peripheral groove (15) on the injection nozzle (11) and being able to engage on a locking collar (14) protruding radially around the periphery of the connecting sleeve (12), on the other, and being designed as an integral plastic clip (10) consisting of a C-shaped annular disc (16), which has an inner diameter corresponding to the outer diameter of the peripheral groove (15) and a groove engagement region with a thickness corresponding to the groove width, and of spring protrusions (17) protruding away from the annular disc (16) in the axial direction of the clip, which spring protrusions (17) each have, on their inner sides facing towards one another, an engagement lug (18) for engaging behind the locking collar (14).

2. Injection device according to Claim 1, characterised in that the annular disc (16) has a coaxial recess (19) with an inner diameter corresponding to the outer diameter of the injection nozzle (11) in the region of the peripheral groove (15), the axial depth of which recess is dimensioned to equal the difference between the disc thickness and the width of the peripheral groove (15).

3. Injection device according to Claim 1 or 2, characterised in that the opening width in the annular disc (16) is dimensioned to be smaller than its inner diameter.

4. Injection device according to Claim 3, characterised in that the opening (20) is bounded by parallel end surfaces (21) of the annular disc (16) which retreat towards the outer periphery of the annular disc (16) after the opening width and are rounded at this point.

5. Injection device according to one of Claims 1-4, characterised in that a total of three spring protrusions (17) arranged offset by the same peripheral angle relative to one another are present and one of them is diametrically opposite the opening (20) in the C-shaped annular disc (16).

6. Injection device according to one of Claims 1-5, characterised in that each engagement lug (18) has a rear engagement surface (23) extending transverse to the clip axis and a lift-out chamfer (24) which extends at an acute angle to the clip axis and by means of which the engagement lug (18) can slide over the locking collar (14) while the spring protrusion (17) is deflected.

7. Injection device according to one of Claims 1-6, characterised in that the plastic clip (10) consists of glass-fibre reinforced plastic.

**Revendications**

1. Dispositif d'injection de carburant comprenant une conduite d'injection (13), avec une tubulure de connexion (12), une buse d'injection (11), ainsi qu'un élément de connexion (10) pour relier une buse d'injection (11) à une tubulure de connexion (12) coaxiale sur la conduite d'injection (13), l'élément de connexion (10) venant en prise, d'une part, dans une gorge périphérique (15) sur une buse d'injection (11) et étant encliquetable sur un collet de verrouillage (14) s'étendant radialement sur sa périphérie sur la tubulure de connexion (12), et il est réalisé sous forme de clip en matière synthétique (10) mono-pièce à partir d'une rondelle annulaire (16) en forme de C, qui possède un diamètre intérieur correspondant au diamètre extérieur de la gorge périphérique (15) et un domaine de prise de gorge d'une épaisseur correspondant à la largeur de gorge, et des pattes élastiques (17) partent de la rondelle annulaire (16) en direction axiale, qui présentent chacune sur leurs faces internes dirigées l'une vers l'autre, un nez de verrouillage (18) pour venir se verrouiller sur le collet de verrouillage (14).

2. Dispositif d'injection selon la revendication 1, caractérisé en ce que la rondelle annulaire (16) présente un évidement coaxial (19) avec un diamètre intérieur correspondant au diamètre extérieur de la buse d'injection (11) dans le domaine de la gorge périphérique (15), dont la profondeur axiale est égale à la différence entre l'épaisseur de rondelle et la largeur de gorge de la gorge périphérique (15).

3. Dispositif d'injection selon la revendication 1 ou 2, caractérisé en ce que le diamètre de l'orifice dans la rondelle annulaire (16) est plus petite que son diamètre intérieur.

4. Dispositif d'injection selon la revendication 3, caractérisé en ce que l'orifice (20) est délimité par des faces frontales parallèles (21) de la rondelle (16) annulaire, qui passent de la périphérie externe de la rondelle annulaire (16) derrière la largeur d'orifice et sont arrondies à cet endroit.

5. Dispositif d'injection selon l'une des revendications 1 à 4, caractérisé en ce qu'on implante trois pattes élastiques (17) faisant le même angle entre elles, et dont l'une est diamétralement opposée à l'orifice (20) de la rondelle annulaire (16) en C.

6. Dispositif d'injection selon l'une des revendications 1 à 5, caractérisé en ce que chaque nez de verrouillage s'étendant transversalement par rapport à l'axe du clip (23) et un chanfrein de levage (24) qui fait un angle aigu avec l'axe du clip, au moyen duquel le nez de verrouillage (18) peut venir se glisser sur le collet de verrouillage (14) après écartement de la partie élastique (17).

7. Dispositif d'injection selon l'une des revendications 1 à 6, caractérisé en ce que le clip de matière plastique (10) est en matière plastique renforcée de fibres de verre.

Fig.1

Fig.2

Fig.3